# EUROPEAN PATENT SPECIFICATION

(11) **EP 2 003 152 B1**
(45) Date of publication and mention of the grant of the patent: **16.03.2011**
(21) Application number: 08251907.5
(22) Date of filing: 30.05.2008
(51) Int. Cl.: C08F 220/12, C08F 293/00

(54) **Aqueous emulsion polymer associative thickeners**
Assoziative Verdickungsmittel für wässrige Emulsionspolymere
Épaississants associatifs de polymère à émulsion aqueuse

(30) Priority: 11.06.2007 US 934038 P
(43) Date of publication of application: 17.12.2008
(73) Proprietor: ROHM AND HAAS COMPANY, Philadelphia, Pennsylvania 19106-2399 (US)
(72) Inventor: Madle, Thomas Glenn, Pennsylvania 19031, (US); Van Dyk, Antony Keith, Pennsylvania 19422 (US)
(74) Representative: Kent, Venetia Katherine

(56) References cited:
- FR-A- 2 868 784
- LOWE ET AL: "Reversible addition-fragmentation chain transfer (RAFT) radical polymerization and the synthesis of water-soluble (co)polymers under homogeneous conditions in organic and aqueous media" PROGRESS IN POLYMER SCIENCE, PERGAMON PRESS, OXFORD, GB, vol. 32, no. 3, 2 March 2007 (2007-03-02), pages 283-351, XP005911232 ISSN: 0079-6700
- SANT V P ET AL: "Novel pH-sensitive supramolecular assemblies for oral delivery of poorly water soluble drugs: preparation and characterization" JOURNAL OF CONTROLLED RELEASE, ELSEVIER, AMSTERDAM, NL, vol. 97, no. 2, 18 June 2004 (2004-06-18), pages 301-312, XP004515649 ISSN: 0168-3659

## Description

This invention relates to aqueous compositions and processes including certain aqueous emulsion polymers, particularly those which are effective as associative thickeners for aqueous systems. More particularly, this invention relates to an aqueous emulsion polymer including, as copolymerized units: from 8%to 25 wt%, based on polymer weight, acid-containing monomer, from 2% to 30 wt%, based on polymer weight, (meth)acrylic acid ester of the formula: H₂C=C(R)-C(O)-O-(CH₂-CH₂O)ₙ-R°, wherein R is H or CH₃, n is from 2 to 100 and R° is a group containing from 4 to 36 carbon atoms, and from 35% to 90 wt%, based on polymer weight, (C₁-C₄) alkyl (meth)acrylate; wherein the polymer is formed by a living free radical polymerization process or, in the alternative, wherein the polymer is formed in the presence of a compound including the group - C(=S)-S-. An aqueous composition including the aqueous emulsion polymer and a dry polymeric composition including the polymer are also provided. Further, the present invention is related to processes whereby the aqueous emulsion polymer, the dry polymeric composition, and a RAFT agent are provided. The dry polymeric composition of this invention is particularly useful as a film, coating, sealing compound or filling compound having water resistance properties superior to a corresponding composition including previously disclosed higher acid content thickeners.

The present invention relates to an aqueous emulsion polymer formed by "controlled" or "living" radical polymerization leading to polymers, especially telechelic, gradient and block aqueous emulsion polymers which are water-insoluble but become water-soluble or - swellable upon raising the pH above about 7.

US Patent Application Publication No. 2006/0039939 discloses thiocarbonate compounds which are used as rheology modifiers or associative thickeners for systems, including aqueous systems. The thiocarbonate compounds include at least one hydrophilic group containing repeat unit preferably derived from (meth)acrylic acid or (meth)acrylamide or the like and at least one hydrophobic group. However, the thickeners disclosed include relatively high hydrophilic monomer levels such as relatively high acid-group levels which may produce an inimical effect on systems incorporating the thickeners.

In a first aspect of the present invention, there is provided an aqueous emulsion polymer comprising, as copolymerized units:
from 8%to 25 wt%, based on polymer weight, acid-containing monomer, from 2% to 30 wt%, based on polymer weight, (meth)acrylic acid ester of the formula: H₂C=C(R)-C(O)-O-(CH₂-CH₂ O)ₙ-R^{o}, wherein R is H or CH₃, n is from 2 to 100 and R° is a group containing from 4 to 36 carbon atoms, and
from 35% to 90 wt%, based on polymer weight, (C₁-C₄) alkyl (meth)acrylate;
wherein said polymer is formed by a living free radical polymerization process.

In a second aspect of the present invention, there is provided an aqueous emulsion polymer comprising, as copolymerized units:
from 8%to 25 wt%, based on polymer weight, acid-containing monomer, from 2% to 30 wt%, based on polymer weight, (meth)acrylic acid ester of the formula: H₂C=C(R)-C(O)-O-(CH₂-CH₂ O)n-R°, wherein R is H or CH₃, n is from 2 to 100 and R° is a group containing from 4 to 36 carbon atoms, and
from 35% to 90 wt%, based on polymer weight, (C₁-C₄) alkyl (meth)acrylate;
wherein said polymer is formed in the presence of a compound comprising the group -C(=S)-S-.

In a third aspect of the present invention, there is provided an aqueous composition comprising the aqueous emulsion polymer of the first or second aspects of the present invention.

In a fourth aspect of the present invention, there is provided a dry polymeric composition comprising a polymer and the aqueous emulsion polymer of the first or second aspect of the present invention..

Processes for providing the aqueous emulsion polymers, the dry polymeric composition, and a RAFT agent are also provided.

In one embodiment of the present invention, an aqueous emulsion polymer is provided, including, as copolymerized units:
from 8%to 25 wt%, preferably from 10% to 20%, based on polymer weight, acid-containing monomer,
from 2% to 30 wt%, based on polymer weight, (meth)acrylic acid ester of the formula: H₂C=C(R)-C(O)-O-(CH₂-CH₂ O)ₙ-R°, wherein R is H or CH₃, preferably CH₃; n is from 2 to 100, preferably from 2 to 60, more preferably from 2 to 40, and alternatively from 2 to 10; and R° is a group containing from 4 to 36 carbon atoms, preferably from 4 to 24 carbon atoms, and more preferably from 12 to 18 carbon atoms or having an average of 12 to 18 or more carbon atoms, alternatively unsubstituted or substituted alkyl, aryl, or polyaryl; and
from 35% to 90 wt%, based on polymer weight, (C₁-C₄) alkyl (meth)acrylate, preferably ethyl acrylate;
wherein the polymer is formed by a living free radical polymerization process or, in the alternative, wherein the polymer is formed in the presence of a compound including the group -C(=S)-S-..

The use of the term "(meth)" followed by another term such as (meth)acrylate or (meth)acrylamide, as used throughout the disclosure, refers to both acrylates or acrylamides and methacrylates and methacrylamides, respectively.

The aqueous emulsion polymer may also include, as copolymerized units, independently, from 0% to 10 wt%, based on polymer weight, ethylenically unsaturated hydrophobic monomer having less than 0.1% wt/wt water solubility at 25°C such as, for example, lauryl acrylate; from 0% to 40 wt%, based on polymer weight, ethylenically unsaturated monomer having water solubility from 0.1% to 20% wt/wt at 25°C such as, for example, N-vinyl pyrrolidone; and from 0% to 10 wt%, based on polymer weight, polyethylenically unsaturated monomer such as, for example, allyl (meth)acrylate, diallyl phthalate, 1,4-butylene glycol di(meth)acrylate, 1,2-ethylene glycol di(meth)acrylate, 1,6-hexanediol di(meth)acrylate, and divinyl benzene.

The aqueous emulsion polymer includes, as copolymerized units: from 8%to 25 wt%, preferably from 10% to 20wt%, based on polymer weight, acid-containing monomer. Acid monomers include carboxylic acid monomers such as, for example, acrylic acid, methacrylic acid, crotonic acid, itaconic acid, fumaric acid, maleic acid, monomethyl itaconate, monomethyl fumarate, monobutyl fumarate, and maleic anhydride; and sulfur- and phosphorous-containing acid monomers; and mixtures thereof, preferably (meth)acrylic acid.

The aqueous emulsion polymer includes, as copolymerized units, from 2% to 30 wt%, based on polymer weight, (meth)acrylic acid ester of the formula: H₂C=C(R)-C(O)-O-(CH₂-CH₂ O)ₙ-R° R° is a group containing from 4 to 36 carbon atoms that may be alkyl, aralkyl, polyaryl such as tristyryl phenol or the residue of a polycyclic hydrocarbyl compound such as lanolin or cholesterol. Alkyl groups include lauryl, tridecyl, myristyl, pentadecyl, cetyl, palmityl, stearyl and eicosyl. Mixtures may also be used, such as alkyl groups resulting from the ethoxylation of mixtures of lauryl, stearyl, cetyl and palmityl alcohols. Aralkyl groups include alkylphenyl groups such as octylphenyl and nonylphenyl.

The aqueous emulsion polymer is preferably a telechelic, gradient or block aqueous emulsion polymer. By "telechelic" is meant an end functional polymer where the functionality is a hydrophobic group (hydrophobic relative to the polymer backbone composition which is typically a composition such as MAA and EA) consisting of at least one such hydrophobic group on each end. The end functionality may consist of a block containing one, two or more hydrophobic groups on every end of the polymer. The end functionality may also consist of a gradient where hydrophobic groups are concentrated near the ends of the polymer.

The polymer in the aqueous emulsion polymer is a water-insoluble polymer. By "water-insoluble polymer" is meant herein that the polymer obtained by centrifuging a sample of the aqueous emulsion polymer at a pH of 4, has less than 1% wt/wt solubility in water at 25 C at a pH of 3. However, the aqueous emulsion polymer is an alkali-soluble, or alkali-swellable, and alkali-thickenable material by which is meant herein, that addition of a base to the aqueous emulsion copolymer (in an amount to at least partially neutralize the copolymer) will dissolve the copolymer and simultaneously cause the copolymer to swell and thereby to thicken the composition.

The average particle diameter of the aqueous emulsion polymer particles is typically from 40 nanometers to 400 nanometers, as measured by a Brookhaven Model BI-90 Particle Sizer supplied by Brookhaven Instrument Corp., Holtsville, NY. The number average molecular weight of the aqueous emulsion polymer is typically from 10,000 to 500,000, as determined by GPC measurement.

The aqueous emulsion polymer is formed by a "controlled" or "live" or "living" radical polymerization or, in the alternative, the polymer is formed in the presence of a compound including the group -C(=S)-S-.. By "living free radical polymerization" herein is meant a process that makes block and controlled polymers, preferably polymers including at least two blocks of different composition differing in hydrophobicity as may determined by the calculated Hansch parameter for each block, and thereby excludes the case of uncontrolled or poorly controlled polymerization. Living free radical polymerization includes ATRP (Atom Transfer Radical Polymerization), NMP (Nitroxide Mediated Polymerization) and RAFT (Reversible Addition-Fragmentation chain Transfer) processes that are disclosed in the art. The term RAFT agent is most closely associated with thiocarbonylthio compounds (including dithioesters, trithiocarbonates, xanthates, dixanthogen disulfides and the likes). Tables of RAFT agents are listed in "The Chemistry of Radical Polymerization" Moad and Solomon, Elsevier, 2006, pages 508-514. In a more general sense the term RAFT agent is any compound which mediates RAFT polymerization and includes macromonomer RAFT agents. In certain preferred embodiments a RAFT agent macromonomer or thiocarbonylthio compound is employed such as, for example, a macromonomer or compound containing -X-C(=S)-S- where X is S, O, N, or C and is unsubstituted or substituted, and, further, dibenzyl trithiocarbonate ("DBTTC") or O-ethyldithiocarbamate (Xanthate A).

Conventional free radical polymerization proceeds by growth by propagation of macro-radicals. Those macro-radicals, which have a very short life, recombine irreversibly by coupling or dismutation. When polymerization takes place in the presence of several comonomers, the variation in the composition of the mixture is slight considering the life of the macro-radical, so that the chains have a random chain formation from the monomer units and not a block chain formation. A process for preparing copolymers in the presence of a stable free radical from the nitroxide family is described in US Patent No. 6,255,402. Nitroxide-mediated stable radicals have been used to produce controlled block copolymers, as described in US Patent No. 6,255,448, and US Patent Application Publication No. 2002/0040117. A process for preparing block copolymers in the presence of a RAFT agent (RAFT agent, RAFT agent macromonomer, thiocarbonylthio, xanthate, or dixanthate compound) is described in US Patent Nos.3862975 and 6380335, WO 98/01478, WO 98/58974, WO 99/31144, WO 99/35177, WO 03/055919, and WO 2006/037161.

The emulsion polymerization techniques used to prepare the aqueous emulsion polymer are well known in the art such as, for example, as disclosed in U.S. Patents No. 4,325,856; 4,654,397; and 4,814,373. Conventional surfactants may be used such as, for example, anionic and/or nonionic emulsifiers such as, for example, alkali metal or ammonium alkyl sulfates, alkyl sulfonic acids, fatty acids, and oxyethylated alkyl phenols. The amount of surfactant used is usually 0.1% to 6% by weight, based on the weight of total monomer. Thermal, redox, or UV initiation processes may be used. Conventional free radical initiators may be used in addition to the agents required to provide a living polymerization reaction such as, for example, hydrogen peroxide, t-butyl hydroperoxide, t-amyl hydroperoxide, alkali or ammonium persulfates, and azo initiators such as 4,4'-azobis(4-cyanopentanoic acid), and 2,2'-azobisisobutyronitrile ("AIBN"), typically at a level of 0.01% to 3.0% by weight, based on the weight of total monomer. Redox systems using the same initiators coupled with a suitable reductant such as, for example, sodium sulfoxylate formaldehyde, sodium hydrosulfite, isoascorbic acid, hydroxylamine sulfate and sodium bisulfite may be used at similar levels, optionally in combination with metal ions such as, for example iron and copper, optionally further including complexing agents for the metal. Chain transfer agents such as mercaptans may be used to lower the molecular weight of the polymers. The monomer mixture may be added neat or as an emulsion in water. The monomer mixture may be added in a single addition or in multiple additions or continuously over the reaction period using a uniform or varying composition. The process may utilize a preformed seed emulsion polymer such as, for example, by adding 5% (based on total monomer) of a 50nm preform seed to the kettle. Techniques to reduce residual monomer such as, for example, subjecting the reaction mixture to steam stripping, hold times, and additional radical sources may be employed. Processes yielding polymodal particle size distributions such as those disclosed in US Patent Nos. 4,384,056 and 4,539,361, for example, may be employed.

The aqueous emulsion polymer is preferably made according to the following process. A RAFT agent with optional surfactant and/or methyl beta cyclodextrin ("CD" herein) and optional seed latex particles is preferably added to water in a reaction kettle. Initially about 2 to about 20 hydrophobic monomers ("hydrophobic monomers" herein are selected from: (meth)acrylic acid esters of the formula: H₂C=C(R)-C(O)-O-(CH₂-CH₂ O)ₙ-R°, wherein R is H or CH₃, n is from 2 to 100, and R° is a group containing from 4 to 36 carbon atoms; ethylenically unsaturated hydrophobic monomers having less than 0.1% wt/wt water solubility at 25°C; and, preferably, mixtures thereof) are inserted into each RAFT agent with optional monomers such as MAA and EA. Mono or difunctional RAFT agents can be used. In one embodiment difunctional RAFT agents such as, preferably, DBTTC are employed and 1 to about 10 hydrophobic monomers are inserted into each side of the DBTTC RAFT agent, preferably at least two hydrophobic monomers such as a (meth)acrylic acid ester of the formula: H₂C=C(R)-C(O)-O-(CH₂-CH₂ O)ₙ-R°, wherein R is H or CH₃, n is from 2 to 100, and R° is a group containing from 4 to 36 carbon atoms are inserted into each side. Other monomers such as MAA and EA may optionally be included. Combinations of hydrophobic monomers can be used. The monomers, including hydrophobic monomers, can be added as a shot in a batch polymerization process or added over a period of time such as 20 minutes. The monomers, including hydrophobic monomers can be added neat or as a monomer emulsion with surfactant and water or a solution with CD and water. Optionally this first stage polymerization may be conducted in bulk and subsequently added to water in a reaction kettle. Subsequently EA, MAA, and optional co-monomers such as N-vinyl pyrrolidone and optional hydrophobic monomer and optional polyethylenically unsaturated monomers such as diallyl phthalate are added, preferably as a monomer emulsion with surfactant and water, and polymerized to produce the composition described above. The pH of the kettle water may be adjusted with a H3PO4 or the like to below about 3 to improve incorporation of MAA or other acid monomer. The same or different, and combinations of the same or different, hydrophobic monomer may be incorporated. Monomer feeds may be constant or differential and pulses and gradients and stages of monomers may be used with or without holding periods.

The aqueous composition of the invention includes an aqueous medium, the continuous phase of the aqueous composition excluding any soluble polymer being predominantly water; optionally the medium may include various soluble materials such as, for example, alcohols and alcohol esters. In certain embodiments the aqueous medium may be provided wholly or in part with the polymer, such as, for example, by the aqueous emulsion polymer which may provide both the polymer and an aqueous medium. The aqueous composition of the invention may include a polymer, in addition to the aqueous emulsion polymer, which may be soluble, swellable, or dispersed in the aqueous composition. The polymer may be thermoplastic, self-crosslinking, or thermosetting via the agency of an external crosslinker. Preferably the polymer is a dispersed polymer prepared by emulsion polymerization.

Inorganic particles such as, for example, pigments and extenders, may be included in the aqueous composition at a level of from 0 to 95 volume %, based on the total dry volume of the aqueous composition and inorganic particles. Typically, the aqueous composition of this invention has a solids level in the range of from 20 to 50 volume %, based on the volume of the aqueous composition. The pH of the aqueous composition is typically in the range of from 6 to 11, and preferably, in the range of from 7 to 10. A suitable viscosity range for the aqueous composition is from 50 to 130 Kreb units (KU), preferably from 70 to 120 KU, and more preferably from 90 to 110 KU.

Inorganic particles include: pigments and fillers such as metal oxides such as zinc oxide, calcium oxide, cerium oxide, tin oxide, antimony oxide, zirconium oxide, chromium oxide, cadmium pigments such as cadmium yellow, cadmium red, and cadmium cinnabar; bismuth pigments such as bismuth vanadate and bismuth vanadate molybdate; mixed metal oxide pigments such as cobalt titanate green and other mixed metal oxide pigments; chromate and molybdate pigments such as chromium yellow, molybdate red, and molybdate orange; ultramarine pigments; cobalt oxide pigments; nickel antimony titanates; lead chrome; blue iron pigments; carbon black; and metal effect pigments such as aluminum, copper, copper oxide, bronze, stainless steel, nickel, zinc, and brass; lead oxide, aluminum oxide, silicon oxide, titanium dioxide; zinc sulfide, lithopone, calcium carbonate, calcium sulfate, barium sulfate, mica, clay, calcined clay, feldspar, nepheline syenite, wollastonite, diatomaceous earth, alumina silicates, magnesium silicates and talc. Titanium dioxide includes treated and surface coated grades (containing for example silica and alumina) useful in coatings applications.

In one embodiment, the inorganic particles may have a particle size which is from 10nm to 100µm, preferably from 50nm to 50 µm. Examples of desired inorganic particles with a particle size of less than 100µm include zinc oxide, silicon oxide, titanium dioxide, and iron oxide. In another embodiment, the inorganic particles may have a particle size which is from 100nm to 100mm. Examples of desired inorganic particles and fillers with a particle size less than 100mm include stone, basalt, granite, schist, limestone, clay, calcium oxide, sand, silicon oxide, hydraulic cements and non hydraulic cements including gypsum and optional colored pigments including titanium dioxide and iron oxide.

The aqueous composition may optionally contain organic pigment particles. Suitable organic pigments include plastic pigments such as solid bead pigments and microsphere pigments containing voids or vesicles. Examples of solid bead pigments include polystyrene and polyvinyl chloride beads. Examples of microsphere pigments, which include polymer particles containing one or more voids include Ropaque^{™} opaque polymer Polymers and vesiculated polymer particle, as disclosed in US Patent Nos. 4,427,835; 4,920,160; 4,594,363; 4,469,825; 4,468,498; 4,880,842; 4,985,064; 5,157,084; 5,041,464; 5,036,109; 5,409,776; and 5, 510, 422.

The aqueous composition may optionally contain certain other organic and inorganic pigment particles. The colorant particles provide color to the pigmented polymer composition and to coatings prepared from the pigmented polymer composition. Colorant particles include colored pigments, black pigments, metal effect pigments, and luminescent pigments such as fluorescent pigments and phosphorescent pigments. Examples of colors for the pigmented polymer composition include black, magenta, yellow, and cyan, as well as combinations of these colors such as orange, blue, red, pink, green, and brown. Other suitable colors for the pigmented polymer composition include fluorescent colors; metallic colors such as silver, gold, bronze, and copper; and pearlescent pigments. These colors are obtained by employing one or more different types of colorant particles.

The colorant particles include inorganic colorant particles and organic colorant particles. Typically, the colorant particles have average particle diameters in the range of from 10 nanometers (nm) to 50 microns, preferably in the range of 20 nm to 5 microns, and more preferably, in the range of from 40 nm to 2 microns.

Suitable organic colorant particles include, for example, azo pigments, monoazo pigments, diazo pigments, azo pigment lakes, β-naphthol pigments, naphthol AS pigments, benzimidazolone pigments, diazo condensation pigment, metal complex pigments, isoindolinone, and isoindoline pigments, polycyclic pigments, phthalocyanine pigments, quinacridone pigments, perylene and perinone pigments, thioindigo pigments, anthrapyrimidone pigments, flavanthrone pigments, anthanthrone pigments, dioxazine pigments, triarylcarbonium pigments, quinophthalone pigments, and diketopyrrolo pyrrole pigments.

Examples of suitable organic colorant particles and inorganic colorant particles include: Color Index Pigment Yellow 1, 2, 3, 5, 6, 10, 12, 13, 14, 16, 17, 62, 65, 73, 74, 75, 81, 83, 87, 90, 93, 94, 95, 97, 98, 99, 199, 101, 104, 106, 108, 109, 110, 111, 113, 114, 116, 117, 120, 121, 123, 124, 126, 127, 128, 129, 130, 133, 136, 138, 139, 147, 148, 150, 151, 152, 153, 155, 165, 166, 167, 168, 169, 170, 171, 172, 173, 174, 175, 176, 177, 179, 180, 181, 182, 183, 184, 185, 187, 188, 190, 192, 193, and 194; Color Index Pigment Orange 1, 2, 5, 6, 13, 15, 16, 17, 17:1, 19, 22, 24, 31, 34, 36, 38, 40, 43, 44, 46, 48, 49, 51, 60, 61, 62, 64, 65, 66, 67, 68, and 69; Color Index Pigment Red 1, 2, 3, 4, 5, 6, 7, 8, 9, 10, 11, 12, 13, 14, 15, 16, 17, 18, 21, 22, 23, 31, 32, 38, 48:1, 48:2, 48:3, 49:1, 49:2, 49:3, 50;1, 51, 52:1, 52:2, 53:1, 57:1, 60:1, 63:1, 66, 67, 68, 81, 95, 112, 114, 119, 122, 136, 144, 146, 147, 148, 149, 150, 151, 164, 166, 168, 169, 170, 171, 172, 175, 176, 177, 178, 179, 181, 184, 185, 187, 188, 190, 192, 194, 200, 202, 204, 206, 207, 210, 211, 212, 213, 214, 216, 220, 222, 237, 238, 239, 240, 242, 243, 245, 247, 248, 251, 252, 253, 254, 255, 256, 258, 261, and 264; Color Index Pigment Violet: 1, 2, 3, 5:1, 13, 19, 23, 25, 27, 29, 31, 32, 37, 39, 42, 44, and 50; Color Index Pigment Blue 1, 2, 9, 10, 14, 15:1, 15:2, 15:3, 15:4, 15:6, 15, 16, 18, 19, 24:1, 25, 56, 60, 61, 62, 63, 64, and 66; Color Index Pigment Green 1, 2, 4, 7, 8, 10, 36, and 45; Color Index Pigment Black 6, 7, 10, 11, and 28; and Color Index Pigment Brown 1, 5, 22, 23, 25, 38, 41, and 42.

A process for thickening or modifying the rheology of an aqueous composition includes admixing therewith the aqueous emulsion polymer of the invention and providing the admixture with a pH of 7 or greater, that is, adjusting or maintaining the pH of the admixture to a pH of 7 or greater.

The aqueous composition of this invention may find utility in adhesives and sealants, concrete, grouts, renders, plasters, stuccos, E.I.F.S. (Exterior Insulation Finish Systems) and mortars, agricultural and pharmaceutical compositions, treatments for porous substrates such as leather, nonwoven or woven fabrics, wood and the like, or as an aqueous coating composition. The aqueous compositions including inorganic particles inorganic and optionally organic particles are prepared by techniques which are well known in the coatings art. First, the inorganic particles are typically well dispersed in the presence of an organic polymer dispersant and optionally the aqueous emulsion polymer of the instant invention (including optional additives such as surfactants, defoamers, biocides, mildewcides, colorants, co-thickeners, flow aids, slip aids, odor masks, solvents, cosolvents and coalescents) in an aqueous medium under high shear such as is afforded by a COWLES^{™} mixer. Then, in some embodiments, an organic pigment and, independently, an emulsion polymer may be added under low shear stirring along with other coatings adjuvants as desired. The aqueous composition may contain, in addition to the aqueous emulsion polymer associative thickener of this invention, conventional coatings adjuvants such as, for example, emulsifiers, coalescing agents (coalescents), plasticizers, antifreezes, curing agents, buffers, neutralizers, thickeners, rheology modifiers other than those of this invention, humectants, wetting agents, biocides, mildewcides, plasticizers, antifoaming agents, defoaming agents, UV absorbers, fluorescent brighteners, light or heat stabilizers, chelating agents, dispersants, colorants, waxes, water-repellants, and anti-oxidants.

Conventional coatings application methods such as, for example, brushing, rolling, dipping, trowelling, spreading, scraping, spraying methods such as, for example, air-atomized spray, air-assisted spray, airless spray, electrostatic spray, high volume low pressure spray, and air-assisted airless spray, electrodeposition may be used for applying the aqueous composition of this invention. Additionally, for some systems, other application techniques may be used to apply the aqueous coating composition, such as, printing devices as piezo ink jet, thermal ink jet, etc, gravure roll, etc, caulk gun, roll coaters, curtain coaters, and air-knife coating. The aqueous coating composition may be advantageously applied to substrates such as, for example, plastic, wood, metal, primed surfaces, previously painted surfaces, weathered painted surfaces, glass, textiles, paper, nonwovens, composites, and cementitious substrates. Drying an aqueous composition to this invention to provide a dry polymeric composition such as, for example, a film, coating, sealing compound or filling compound is typically allowed to proceed under ambient conditions such as, for example, at 0°C to 35°C but may be accelerated with higher temperatures or low humidity.

In one embodiment of the present invention a process for forming a RAFT agent is provided, including :a) providing a carboxylic acid-functional RAFT agent and b) contacting said the RAFT agent with a glycidyl ether-functional hydrophobic group, the hydrophobic group comprising from 4 to 36 carbon atoms.

### Experimental Method

### Procedure for identification of aqueous emulsion polymers of the invention.

100g of Rhoplex^{™} AC-261 is weighed out into a suitable container. Then a solution or dispersion of 0.6g of the test polymer in 4.4g of water is added with stirring. The pH is adjusted with NH₄OH solution to pH 9.0. Mixing is continued on a Hauschild SpeedMixer^{™} DAC 150 FVZ for 2 minutes to ensure homogeneity. A Brookfield DV-I+ viscometer with a number 3 spindle at 100 rpm is used to measure the viscosity of the sample at 25°C.
A 25g portion of this thickened composition is taken and mixed with 1.25g Polystep^{™} B7 surfactant solution (30% in water) in a Hauschild SpeedMixer^{™} DAC 150 FVZ for 2 minutes. The sample is adjusted to 25°C and its viscosity measured at 100 rpm. The viscosities without and with surfactant are compared. Greater difference between as-is viscosity and surfactant suppressed viscosity is used as a measure of the associative thickener power of the thickener. The aqueous emulsion polymers of the present invention are found to have viscosities from 20 to more than 1000 times greater than their surfactant-suppressed viscosities which is taken herein to mean that hydrophobic associative groups have been incorporated into the chain ends.

The following examples are presented for illustrative purposes.

### Abbreviations used

- Ethyl acrylate: EA
- Methacrylic acid: MAA
- Lauryl acrylate: LA
- Sodium lauryl sulfate: SLS
- 1-Dodecanethiol: n-DDM
- Sodium Persulfate: NaPS
- Deionized water: DI water

### EXAMPLE 1.

| | Preparation of aqueous emulsion polymer. | |
|---|---|---|
| Stage | | g |
| A | DI water | 907.3 |
| | Disponil^{™} FES 32 (30%) | 17.2 |
| | EA | 33.6 |
| | MAA | 7.46 |
| | C18-EO20-MA | 26.11 |
| | RAFT agent | 1.52 |
| | NaPS | 1.0 |
| | Hold for 30 minutes | |
| | Add monomer emulsion B over 90 minutes | |
| B | DI water | 275.1 |
| | Disponil^{™} FES32 (30%) | 17.2 |
| | EA | 316.4 |
| | MAA | 61.9 |
| | C12-EO23-MA | 34.4 |
| | Hold for 30 minutes | |
| | Final solids 29% | |

Disponil^{™}FES32 made by Cognis Corp. is described as sodium lauryl ether sulfate.
Add DI water and surfactant to the reaction kettle and start the agitator. Heat the kettle to 80°C. Dissolve the RAFT agent (such as dibenzyl trithiocarbonate ("DBTTC")) into the monomer mix then add the monomer mix along with the NaPS initiator and heat the kettle to 85°C and hold for 30 minutes. Add the monomer emulsion of EA, MAA, and C12-EO23-MA over 1.5 hours then hold for 30 minutes after the feed is completed.

### EXAMPLE 2.

| | Preparation of aqueous emulsion polymer. | |
|---|---|---|
| Stage | | g |
| A | DI water | 706.3 |
| | SLS (28%) | 17.2 |
| | CD 50% | 200 |
| | EA | 33.6 |
| | MAA | 7.46 |
| | C18-EO20-MA | 26.11 |
| | RAFT agent | 1.52 |
| | NaPS | 1.0 |
| | Hold for 30 minutes | |
| | Add the following monomer emulsion over 120 minutes | |
| B | DI water | 275.2 |
| | SLS (28%) | 17.2 |
| | EA | 316.4 |
| | MAA | 61.9 |
| | C12-EO23-MA | 34.4 |
| | Hold for 30 minutes | |
| | Final solids 35% | |

Example 2 is based on Example 1 with the addition of heptakis(2,6-di-O-methyl)-b-cyclodextrin, Cavasol^{™} W7 M TL from Wacker Chemie ("CD"). The cyclodextrin may optionally be added in a third stage.

### EXAMPLE 3.

| | Preparation of aqueous emulsion polymerPreparation of aqueous emulsion polymer | |
|---|---|---|
| Stage | | g |
| A | DI water | 906.3 |
| | H3PO4 (85%) to adjust to pH<3.0 | 1.0 |
| | SLS (28%) | 27.4 |
| | EA | 65.0 |
| | MAA | 3.0 |
| | LA | 5.2 |
| | RAFT agent | 1.52 |
| | NaPS | 1.0 |
| | Hold for 30 minutes | |
| | Add the following monomer emulsion over 120 minutes | |
| B | DI water | 275.2 |
| | SLS (28%) | 17.2 |
| | EA | 316.4 |
| | MAA | 68.5 |
| | C12-EO23-MA | 34.4 |
| | Hold for 30 minutes | |
| | Final solids 29% | |

Example 3 is based on Example 1 with lauryl acrylate hydrophobic monomer in Stage A in place of C18-EO20-MA monomer.

### EXAMPLE 4.

| | Preparation of aqueous emulsion polymer | |
|---|---|---|
| | | g |
| A | DI water | 976.3 |
| | SLS (28%) | 17.2 |
| | EA | 33.6 |
| | MAA | 7.46 |
| | C18-EO20-MA | 26.11 |
| | RAFT agent | 1.52 |
| | NaPS | 1.0 |
| | Hold for 30 minutes | |
| B | H3PO4 (85%) to adjust to pH<3.0 | 1.0 |
| | Add the following monomer emulsion over 2hr | |
| C | DI water | 70 |
| | SLS (28%) | 10 |
| | EA | 158 |
| | MAA | 30.8 |
| | C12-EO23-MA | 22 |
| | Hold for 30 minutes | |
| | Final solids 21% | |

Example 4 produces a telechelic alkali swellable emulsion thickener with a number average molecular weight, Mn, of about 20,000.

### EXAMPLE 5.

| | Preparation of aqueous emulsion polymer | |
|---|---|---|
| Stage | | g |
| A | DI water | 906.3 |
| | SLS (28%) | 17.2 |
| | EA | 33.6 |
| | MAA | 7.46 |
| | C18-EO20-MA | 26.11 |
| | RAFT agent | 1.52 |
| | NaPS | 0.6 |
| | Add the following monomer emulsion over 4hr | |
| B | DI water | 275.2 |
| | SLS (28%) | 17.2 |
| | EA | 316.4 |
| | MAA | 61.9 |
| | Hold for 120 minutes | |
| | Final solids 28% | |

Example 5 uses a lower level of initiator NaPS.

### EXAMPLE 6. Preparation of aqueous emulsion polymer

| Stage | | g |
|---|---|---|
| A | DI water | 1007.3 |
| | SLS (28%) | 17.2 |
| | EA | 33.6 |
| | MAA | 7.46 |
| | Sipomer^{™} SEM-25 | 26.11 |
| | RAFT agent | 1.52 |
| | NaPS | 1.0 |
| | Hold for 30 minutes | |
| | Add the following monomer emulsion over 120 minutes | |
| B | DI water | 175.1 |
| | SLS (28%) | 17.2 |
| | EA | 316.4 |
| | MAA | 61.9 |
| | C12-EO23-MA | 34.4 |
| | Hold for 60 minutes | |
| | Final solids 29% | |

Example 6 uses an alternative hydrophobic monomer in Stage A

### COMPARATIVE EXAMPLE A.

| | Preparation of aqueous emulsion polymer | |
|---|---|---|
| Stage | | g |
| A | DI water | 976.3 |
| | SLS (28%) | 17.2 |
| | EA | 33.6 |
| | MAA | 7.46 |
| | C18-EO20-MA | 26.11 |
| | RAFT agent | 1.52 |
| | NaPS | 0.14 |
| | Hold for 30 minutes | |
| | Add the following monomer emulsion over 4hr | |
| C | DI water | 70 |
| | SLS (28%) | 10 |
| | EA | 158 |
| | MAA | 30.8 |
| | Hold for 120 minutes | |
| | Final solids 20% | |

Comparative Example A uses a level of initiator, NaPS, at about 10%, by weight, of the RAFT agent such as taught in US Patent Application Publication Nos.20060039939 and 20060223936. This example has poor conversion, i.e., less than about 80% of the monomer is incorporated.

### COMPARATIVE EXAMPLE B.

| | Preparation of aqueous emulsion polymer | |
|---|---|---|
| | | g |
| A | DI water | 906.3 |
| | SLS (28%) | 17.2 |
| | EA | 33.6 |
| | MAA | 7.46 |
| | RAFT agent 2 | 2.8 |
| | AIBN | 0.14 |
| | Hold for 30 minutes | |
| | Add the following monomer emulsion over 4hr | |
| C | DI water | 70 |
| | SLS (28%) | 10 |
| | EA | 158 |
| | MAA | 30.8 |
| | Hold for 120 minutes | |
| | Final solids 20% | |

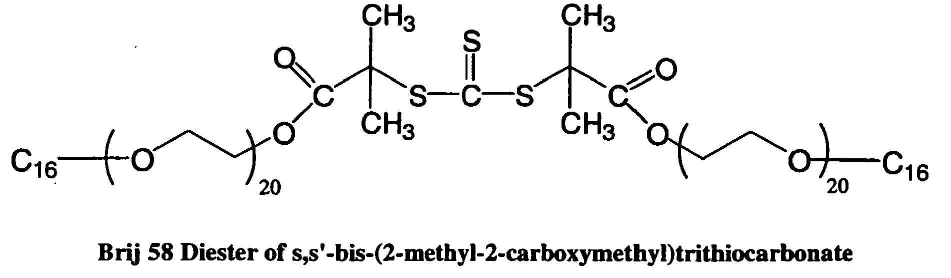

Comparative Example B was made according to the teachings of US Patent Application Publication No.20060039939. The method disclosed therein includes the esterification of alcohols with carboxylic RAFT agents that results in a low yield of diester RAFT agent and significant degradation of the RAFT agent during the esterification process. In the synthesis described above very poor reaction kinetics were found with low conversion, i.e., under about 60% and excessive refluxing of EA. The polymer was isolated from unreacted monomer and found to be a poor thickener compared to the thickeners of this invention. The dependence of the thickener on a single telechelic hydrophobe linked by an ester group was found to cause loss of viscosity with time, presumably as the ester group hydrolyzed, in aqueous coating compositions having pH about 9. EXAMPLE 7. Preparation of aqueous emulsion polymer Example 7 is prepared as Comparative Example B except that the present example employs a carboxylic acid-containing RAFT agent that is reacted with glycidyl ether functionality on a hydrophobe under significantly milder conditions, lower temperature and with much greater yield of diester RAFT agent 3, to provide a telechelic alkali-swellable emulsion polymer thickener.

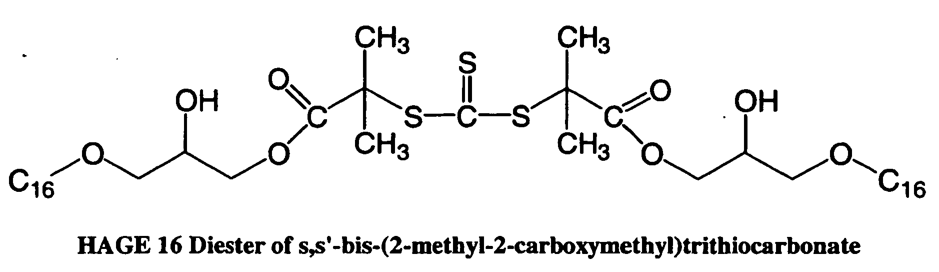

### EXAMPLE 8. Evaluation of aqueous emulsion polymers, aqueous compositions including them, and dry coatings including them

The low viscosity aqueous emulsion polymers of Examples 1-6 are swellable with alkali and produce high viscosity compositions when the pH is raised above about 7. The telechelic aqueous alkali-swellable emulsion polymer is an effective thickener for paints, coatings and aqueous compositions requiring rheology control.

The aqueous emulsion polymer associative thickeners of Examples 1-6 are used in an aqueous coating composition and provide comparable thickening response to known HASE thickeners as disclosed in US Patent No.4,421,902, with much improved early blistering and water resistance properties. The thickening response is more effective than that of the thickeners, such as Comparative Example A, disclosed in US Patent Application Publication No. 20060039939.

An aqueous coating composition including the associative thickener of Examples 1-6 and Comparative Examples A and B are used to cast a 3 mil film on 6 month old alkyd. The film is allowed to dry at 25°C and 50% RH for 2 hours. Then a 1"x1" square of gauze is applied and soaked with DI water. The films including each of Examples 1-6 do not blister or delaminate after soaking for 60 minutes. Comparative Examples A and B films blister in about 5 minutes. The films including each of Examples 1-6 have higher gloss, measured at 60 and 20 degrees, than the films including Comparative Examples A or B. The films including each of Examples 1-6 have better flow and leveling and comparable sag resistance relative to the films including Comparative Examples A or B.

## Claims

1. An aqueous emulsion polymer comprising, as copolymerized units:
from 8%to 25 wt%, based on polymer weight, acid-containing monomer, from 2% to 30 wt%, based on polymer weight, (meth)acrylic acid ester of the formula: H₂C=C(R)-C(O)-O-(CH₂-CH₂ O)ₙ-R^{o}, wherein R is H or CH₃, n is from 2 to 100 and R^{o} is a group containing from 4 to 36 carbon atoms, and
from 35% to 90 wt%, based on polymer weight, (C₁-C₄) alkyl (meth)acrylate;
wherein said polymer is formed by a living free radical polymerization process.

2. An aqueous emulsion polymer comprising, as copolymerized units:
from 8%to 25 wt%, based on polymer weight, acid-containing monomer from 2% to 30 wt%, based on polymer weight, (meth)acrylic acid ester of the formula: H₂C=C(R)-C(O)-O-(CH₂-CH₂ O)ₙ-R^{o}, wherein R is H or CH₃, n is from 2 to 100 and R^{o} is a group containing from 4 to 36 carbon atoms, and
from 35% to 90 wt%, based on polymer weight, (C₁-C₄) alkyl (meth)acrylate;
wherein said polymer is formed in the presence of a compound comprising the group -C(=S)-S-.

3. An aqueous composition comprising the aqueous emulsion polymer of claim 1 or claim 2.

4. A dry polymeric composition comprising a polymer and the aqueous emulsion polymer of claim 1 or claim 2.

5. A process for providing an aqueous emulsion polymer comprising forming an aqueous emulsion polymer comprising, as copolymerized units:
from 8%to 25 wt%, based on polymer weight, acid-containing monomer, from 2% to 30 wt%, based on polymer weight, (meth)acrylic acid ester of the formula: H₂C=C(R)-C(O)-O-(CH₂-CH₂ O)ₙ-R^{o}, wherein R is H or CH₃, n is from 2 to 100 and R^{o} is a group containing from 4 to 36 carbon atoms, and
from 35% to 90 wt%, based on polymer weight, (C₁-C₄) alkyl (meth)acrylate; by a living free radical polymerization process.

6. A process for providing an aqueous emulsion polymer comprising forming an aqueous emulsion polymer comprising, as copolymerized units:
from 8%to 25 wt%, based on polymer weight, acid-containing monomer,
from 2% to 30 wt%, based on polymer weight, (meth)acrylic acid ester of the formula: H₂C=C(R)-C(O)-O-(CH₂-CH₂ O)ₙ-R^{o}, wherein R is H or CH₃, n is from 2 to 100 and R^{o} is a group containing from 4 to 36 carbon atoms, and
from 35% to 90 wt%, based on polymer weight, (C₁-C₄) alkyl (meth)acrylate; in the presence of a compound comprising the group - C(=S)-S-.

7. A process for providing the dry polymeric composition of claim 4 comprising:
a) forming a composition comprising an aqueous medium and a polymer;
b) admixing therewith from 0.1% to 10% by weight based on the weight of said polymer, of the aqueous emulsion polymer of claim 1 or claim 2;
c) applying said admixture to a substrate; and
d) drying, or allowing to dry, said admixture.

8. A process for thickening or modifying the rheology of an aqueous composition comprising: admixing therewith the aqueous emulsion polymer of claim 1 or claim 2; and providing the admixture with a pH of 7 or greater..

9. A process for forming a RAFT agent comprising:
a) providing a carboxylic acid-functional RAFT agent and
b) contacting said RAFT agent with a glycidyl ether-functional hydrophobic group, said hydrophobic group comprising from 4 to 36 carbon atoms.

## Patentansprüche

1. Wässriges Emulsionspolymer, umfassend, als copolymerisierte Einheiten:
von 8 Gew.-% bis 25 Gew.-%, bezogen auf das Polymergewicht, säurehaltiges Monomer, von 2 Gew.-% bis 30 Gew.-%, bezogen auf das Polymergewicht, (Meth)acrylsäureester der Formel: H₂C=C(R)-C(O)-O-(CH₂-CH₂O)ₙ-R⁰, wobei R H oder CH₃ ist, n von 2 bis 100 ist und R⁰ eine Gruppe ist, enthaltend von 4 bis 36 Kohlenstoffatomen, und
von 35 Gew.-% bis 90 Gew.-%, bezogen auf das Polymergewicht, (C₁-C₄)Alkyl(meth)acrylat,
wobei das Polymer durch ein lebendes radikalisches Polymerisationsverfahren gebildet worden ist.

2. Wässriges Emulsionspolymer, umfassend, als copolymerisierte Einheiten:
von 8 Gew.-% bis 25 Gew.-%, bezogen auf das Polymergewicht, säurehaltiges Monomer, von 2 Gew.-% bis 30 Gew.-%, bezogen auf das Polymergewicht, (Meth)acrylsäureester der Formel: H₂C=C(R)-C(O)-O-(CH₂-CH₂O)ₙ-R⁰, wobei R H oder CH₃ ist, n von 2 bis 100 ist und R⁰ eine Gruppe ist, enthaltend von 4 bis 36 Kohlenstoffatomen, und
von 35 Gew.-% bis 90 Gew.-%, bezogen auf das Polymergewicht, (C₁-C₄)Alkyl(meth)acrylat,
wobei das Polymer in der Gegenwart einer Verbindung, umfassend die Gruppe -C(=S)-S-, gebildet worden ist.

3. Wässrige Zusammensetzung, umfassend das wässrige Emulsionspolymer von Anspruch 1 oder Anspruch 2.

4. Trockenpolymerzusammensetzung, umfassend ein Polymer und das wässrige Emulsionspolymer gemäß Anspruch 1 oder Anspruch 2.

5. Verfahren zur Bereitstellung eines wässrigen Emulsionspolymers, umfassend das Bilden eines wässrigen Emulsionspolymers, umfassend, als copolymerisierte Einheiten: von 8 Gew.-% bis 25 Gew.-%, bezogen auf das Polymergewicht, säurehaltiges Monomer, von 2 Gew.-% bis 30 Gew.-%, bezogen auf das Polymergewicht, (Meth)acrylsäureester der Formel: H₂C=C(R)-C(O)-O-(CH₂-CH₂O)ₙ-R⁰, wobei R H oder CH₃ ist, n von 2 bis 100 ist und R⁰ eine Gruppe ist, enthaltend von 4 bis 36 Kohlenstoffatomen, und
von 35 Gew.-% bis 90 Gew.-%, bezogen auf das Polymergewicht, (C₁-C₄)Alkyl(meth)acrylat, durch ein lebendes radikalisches Polymerisationsverfahren.

6. Verfahren zur Bereitstellung eines wässrigen Emulsionspolymers, umfassend das Bilden eines wässrigen Emulsionspolymers, umfassend, als copolymerisierte Einheiten: von 8 Gew.-% bis 25 Gew.-%, bezogen auf das Polymergewicht, säurehaltiges Monomer, von 2 Gew.-% bis 30 Gew.-%, bezogen auf das Polymergewicht, (Meth)acrylsäureester der Formel: H₂C=C(R)-C(O)-O-(CH₂-CH₂O)ₙ-R⁰, wobei R H oder CH₃ ist, n von 2 bis 100 ist und R⁰ eine Gruppe ist, enthaltend von 4 bis 36 Kohlenstoffatomen, und
von 35 Gew.-% bis 90 Gew.-%, bezogen auf das Polymergewicht, (C₁-C₄)Alkyl(meth)acrylat, in der Gegenwart einer Verbindung, umfassend die Gruppe -C(=S)-S-.

7. Verfahren zur Herstellung der trockenen Polymerzusammensetzung gemäß Anspruch 4, umfassend:
a) das Bilden einer Zusammensetzung, umfassend ein wässriges Medium und ein Polymer,
b) das Mischen damit von 0,1 Gew.-% bis 10 Gew.-%, bezogen auf das Gewicht des Polymers, des wässrigen Emulsionspolymers gemäß Anspruch 1 oder Anspruch 2,
c) das Auftragen des Gemisches auf ein Substrat, und
d) das Trocknen oder Trocknenlassen des Gemisches.

8. Verfahren zum Verdicken oder Modifizieren der Rheologie einer wässrigen Zusammensetzung, umfassend: das Mischen des wässrigen Emulsionspolymers gemäß Anspruch 1 oder Anspruch 2, und das Bereitstellen des Gemisches bei einem pH von 7 oder größer.

9. Verfahren zum Bilden eines RAFT-Mittels, umfassend:
a) das Bereitstellen eines Carbonsäure-funktionalen RAFT-Mittels und
b) das Inkontaktbringen des RAFT-Mittels mit einer Glycidylether-funktionalen hydrophoben Gruppe, wobei die hydrophobe Gruppe von 4 bis 36 Kohlenstoffatome umfaßt.

## Revendications

1. Polymère en émulsion aqueuse comprenant, comme unités copolymérisées :
de 8 % à 25 % en masse, rapporté à la masse du polymère, de monomère contenant un acide,
de 2 % à 30 % en masse, rapporté à la masse du polymère, d'ester d'acide (méth)acrylique de la formule : H₂C=C(R)-C(O)-O-(CH₂-CH₂O)ₙ-R^{o},
où R est H ou CH₃, n est égal à de 2 à 100 et R^{o} est un groupe contenant de 4 à 36 atomes de carbone, et
de 35 % à 90 % en masse, rapporté à la masse du polymère, de (méth)acrylate d'alkyle en C₁-C₄ ;
dans lequel ledit polymère est formé par un procédé de polymérisation radicalaire libre vivant.

2. Polymère en émulsion aqueuse comprenant, comme unités copolymérisées :
de 8 % à 25 % en masse, rapporté à la masse du polymère, d'un monomère contenant un acide,
de 2 % à 30 % en masse, rapporté à la masse du polymère, d'ester d'acide (méth)acrylique de la formule : H₂C=C(R)-C(O)-O-(CH₂-CH₂O)ₙ-R^{o},
dans laquelle R est H ou CH₃, n est compris entre 2 et 100 et R^{o} est un groupe contenant de 4 à 36 atomes de carbone, et
de 35 % à 90 % en masse, rapporté à la masse du polymère, de (méth)acrylate d'alkyle en C₁-C₄ ;
dans lequel ledit polymère est formé en présence d'un composé comprenant le groupe -C(=S)-S-.

3. Composition aqueuse comprenant le polymère en émulsion aqueuse selon la revendication 1 ou la revendication 2.

4. Composition polymère sèche comprenant un polymère et le polymère en émulsion aqueuse selon la revendication 1 ou la revendication 2.

5. Procédé consistant à fournir un polymère en émulsion aqueuse comprenant les étapes consistant à former un polymère en émulsion aqueuse comprenant, comme unités copolymérisées :
de 8 % à 25 % en masse, rapporté à la masse du polymère, de monomère contenant un acide,
de 2 % à 30 % en masse, rapporté à la masse du polymère, d'ester d'acide (méth)acrylique de la formule : H₂C=C(R)-C(O)-O-(CH₂-CH₂O)ₙ-R^{o}, dans laquelle R est H ou CH₃, n est égal à de 2 à 100 et R^{o} est un groupe contenant de 4 à 36 atomes de carbone, et
de 35 % à 90 % en masse, rapporté à la masse du polymère, de (méth)acrylate d'alkyle en C₁-C₄ ;
par un procédé de polymérisation radicalaire libre vivant.

6. Procédé consistant à fournir un polymère en émulsion aqueuse comprenant les étapes consistant à former un polymère en émulsion aqueuse comprenant, comme unités copolymérisées :
de 8 à 25 % en masse, rapporté à la masse du polymère, de monomère contenant un acide,
de 2 à 30 % en masse, rapporté à la masse du polymère, d'ester d'acide (méth)acrylique de la formule : H₂C=C(R)-C(O)-O-(CH₂-CH₂O)ₙ-R^{o}, dans laquelle R est H ou CH₃, n est égal à de 2 à 100 et R^{o} est un groupe contenant de 4 à 36 atomes de carbone, et
de 35 % à 90 % en masse, rapporté à la masse du polymère, de (méth)acrylate d'alkyle en C₁-C₄ ; en présence d'un composé comprenant le groupe -C(=S)-S-.

7. Procédé consistant à fournir la composition polymère sèche selon la revendication 4 comprenant les étapes consistant :
a) à former une composition comprenant un milieu aqueux et un polymère ;
b) à mélanger avec celle-ci de 0,1 % à 10 % en masse, rapporté à la masse dudit polymère, du polymère en émulsion aqueuse selon la revendication 1 ou la revendication 2 ;
c) à appliquer ledit mélange sur un substrat ; et
d) à sécher, ou à laisser sécher, ledit mélange.

8. Procédé d'épaississement ou de modification de la rhéologie d'une composition aqueuse comprenant l'étape consistant : à mélanger avec celle-ci le polymère en émulsion aqueuse selon la revendication 1 ou la revendication 2 ; et à fournir le mélange avec un pH de 7 ou supérieur.

9. Procédé de formation d'un agent RAFT comprenant les étapes consistant :
a) à fournir un agent RAFT acide carboxylique-fonctionnel et
b) à mettre ledit agent RAFT en contact avec un groupe hydrophobe glycidyléther-fonctionnel, ledit groupe hydrophobe comprenant de 4 à 36 atomes de carbone.
